# FASCICULE DE BREVET EUROPEEN

(11) **EP 1 949 950 B1**
(45) Date de publication et mention de la délivrance du brevet: **11.03.2009**
(21) Numéro de dépôt: 07122957.9
(22) Date de dépôt: 11.12.2007
(51) Int. Cl.: B01D 35/16, B01D 35/30, F01M 11/03

(54) **Cartouche filtrante pour liquide, sous-ensemble de moteur comportant une telle cartouche.**
Filterpatrone für Flüssigkeiten und eine solche Patrone umfassende Motoruntereinheit
Liquid filtering cartridge, engine sub-assembly comprising such a cartridge.

(30) Priorité: 29.01.2007 FR 0700599; 24.08.2007 FR 0705999
(43) Date de publication de la demande: 30.07.2008
(73) Titulaire: FILTRAUTO, 78280 Guyancourt (FR)
(72) Inventeur: Foucault, Eric, 78730, Ponthevrard (FR); Fertil, Daniel, 28410, Saint Lubin de la Haye (FR)
(74) Mandataire: Cabinet Plasseraud

(56) Documents cités:
- WO-A-20/04087290
- DE-A1- 3 344 568
- DE-A1- 3 432 855

## Description

La présente invention est relative aux cartouches filtrantes pour liquide et aux sous-ensembles de moteur comportant une telle cartouche.

Plus particulièrement, l'invention concerne une cartouche filtrante pour liquide (par exemple de l'huile de lubrification moteur) comportant un boîtier externe délimitant un volume intérieur contenant un élément filtrant qui sépare ledit volume intérieur en un espace amont et un espace aval, le boîtier comprenant un fond délimitant au moins un passage d'entrée de liquide communiquant avec l'espace amont et un passage de sortie de liquide communiquant avec l'espace aval, ledit boîtier étant adapté pour être monté sur un support qui comporte un canal d'entrée de liquide prévu pour communiquer avec le passage d'entrée, un canal de sortie de liquide prévu pour communiquer avec le passage de sortie, et un canal de vidange communiquant avec le passage d'entrée.

Le document DE-A-3432855 divulgue une telle cartouche filtrante montée sur un bloc moteur comportant un bouchon mobile qui obture le canal de vidange quand la cartouche est montée sur le bloc moteur et qui ouvre ledit canal de vidange lorsque la cartouche est démontée. Le système décrit dans ce document nécessite le montage d'une pièce mobile dans le bloc moteur et impose donc au constructeur d'assembler des pièces dans la fonderie de ce bloc moteur. Ce système est donc complexe et couteux.

La présente invention a notamment pour but de pallier ces inconvénients.

A cet effet, selon l'invention, la cartouche filtrante comporte un organe de fermeture fixé au fond du boîtier et adapté à fermer le canal de vidange lorsque la cartouche est montée sur le support.

Grâce à ces dispositions, on supprime le risque de répandre du liquide lors du démontage de la cartouche par rapport au support, sans pour autant devoir monter des pièces mobiles supplémentaires dans le bloc moteur pour la vidange de l'huile comprise en amont du passage d'entrée de la cartouche à l'interface avec le support. L'organe de fermeture peut en outre être réalisé de façon économique, cet organe de fermeture étant changé avec la cartouche filtrante.

Dans divers modes de réalisation de la cartouche filtrante selon l'invention, on peut éventuellement avoir recours en outre à l'une et/ou à l'autre des dispositions suivantes :
- l'organe de fermeture est monté mobile à mouvement perdu sur le fond du boîtier et est sollicité élastiquement à l'opposé du fond ;
- l'organe de fermeture comporte une paroi latérale annulaire qui s'étend selon un axe central entre :
   - une première extrémité voisine du fond et reliée audit fond avec un certain jeu axial,
   - et une deuxième extrémité éloignée dudit fond, ledit fond comportant une portée d'étanchéité annulaire adaptée à venir en contact étanche avec le support et entourant ladite paroi latérale ;
- la deuxième extrémité de la paroi latérale de l'organe de fermeture est prolongée radialement vers l'intérieur par une collerette interne adaptée à venir en contact étanche contre le support en fermant le canal de vidange ;
- le fond du boîtier comporte un rebord intérieur et la première extrémité de la paroi latérale de l'organe de fermeture comporte au moins un rebord extérieur saillant coopérant par accrochage avec ledit rebord intérieur ;
- le rebord intérieur est une rondelle en métal sertie sur une paroi périphérique du boîtier, la rondelle portant un joint, le joint étant la portée d'étanchéité ;
- l'organe de fermeture est sollicité élastiquement par au moins un ressort interposé entre le fond du boîtier et la paroi latérale annulaire ;
- l'organe de fermeture inclut un joint pour obturer de façon étanche le canal de vidange lorsque la cartouche est montée sur le support ;
- la base de l'organe de fermeture est dotée d'un joint permettant d'obturer de façon étanche le canal de vidange lorsque la cartouche est montée sur le support ;
- le joint est fixé à une première extrémité d'une pièce de l'organe de fermeture, ladite pièce comprenant, à une seconde extrémité opposée, une portion d'accrochage avec le fond du boîtier ;
- le ressort comporte une bague élastique s'étendant radialement entre une première extrémité extérieure rattachée à la paroi latérale de l'organe de fermeture et une deuxième extrémité intérieure en appui sur le fond du boîtier ;
- le ressort comporte des lames élastiques dont une première extrémité est reliée à la paroi latérale de l'organe de fermeture et l'autre extrémité est en appui sur le fond du boîtier.
- le ressort est une lame élastique solidaire du fond du boîtier et engagée dans une encoche ménagée à la première extrémité de la paroi latérale annulaire, ladite encoche étant ouverte vers le fond ;
- l'organe de fermeture est sollicité élastiquement par un ressort hélicoïdal interposé entre le fond du boîtier et ladite collerette interne ;
- la collerette comporte des doigts de centrage s'étendant vers le fond du boîtier et coopérant avec ledit ressort ;
- la hauteur d'une cavité d'accrochage du fond du boîtier est supérieure à la hauteur d'une portion d'accrochage de l'organe de fermeture monté à mouvement perdu dans la cavité d'accrochage ;
- un joint de portée d'étanchéité est sur le boîtier, le joint étant adapté à venir en contact étanche avec le support et comportant une plage d'élasticité supérieure au mouvement perdu de l'organe de fermeture sur le fond du boîtier ;
- la cartouche comporte un clapet anti-drain relié au passage de sortie et adapté à s'ouvrir uniquement lorsqu'il règne dans l'espace aval une pression supérieure à une valeur prédéterminée.

Par ailleurs, l'invention a également pour objet un sous-ensemble de moteur comportant un support de cartouche filtrante sur lequel est montée de façon amovible une cartouche filtrante selon l'invention, ledit support comporte un canal d'entrée de liquide qui communique avec le passage d'entrée de la cartouche filtrante, un canal de sortie de liquide qui communique avec le passage de sortie de la cartouche filtrante, et un canal de vidange communiquant avec le passage d'entrée de la cartouche filtrante, ledit canal de vidange étant normalement fermé par l'organe de fermeture.

Dans le sous-ensemble selon l'invention, on peut éventuellement avoir recours en outre à l'une et/ou à l'autre des dispositions suivantes :
- le canal d'entrée est raccordé à un logement annulaire d'entrée délimité par le support ;
- le passage de sortie est central et le passage d'entrée comporte une pluralité d'orifices ménagés dans le fond autour du passage de sortie, le canal de sortie étant central et le logement annulaire étant autour du canal de sortie ;
- le support comporte un relief d'étanchéité en saillie dans le logement annulaire, le relief d'étanchéité délimitant une embouchure de vidange dans le logement annulaire, l'embouchure étant normalement fermée par l'organe de fermeture ;
- le logement annulaire comporte un relief d'équilibrage, par exemple axialement opposé au relief d'étanchéité ;
- le support comporte à la périphérie du logement annulaire d'entrée une surface d'étanchéité coopérant avec la portée d'étanchéité de la cartouche, le support comportant une bordure extérieure à la périphérie de la surface d'étanchéité ;
- la hauteur de la bordure est au moins égale au mouvement perdu de l'organe de fermeture sur le fond du boîtier.

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en perspective d'une cartouche filtrante selon l'invention,
- la figure 2A est une vue en coupe partielle d'une cartouche filtrante selon l'invention dans un premier mode réalisation,
- la figure 2B est une coupe partielle d'une cartouche filtrante selon l'invention dans le premier mode de réalisation, la coupe étant une coupe correspondant à celle de la figure 2A mais angulairement décalée par rapport à celle de la figure 2A de façon à montrer un canal d'entrée du support,
- la figure 3 est une vue de détail de la figure 2,
- la figure 4 est une coupe d'une cartouche filtrante et du support formant le sous-ensemble selon l'invention, en position de démontage partiel de la cartouche filtrante,
- la figure 5 est une vue schématique d'une variante de réalisation,
- la figure 6 est une vue schématique d'une autre variante de réalisation,
- la figure 7 est aussi une vue schématique d'une autre variante de réalisation,
- la figure 8 est une vue en perspective du mode de réalisation de la figure 6 représentant en perspective le boîtier et son organe de fermeture démonté,
- la figure 9A est une coupe partielle comme à la figure 2A d'une cartouche filtrante conforme au premier mode de réalisation à l'exception de l'adjonction d'un joint,
- et la figure 9B est une coupe partielle de la cartouche filtrante de la figure 9A, la coupe étant angulairement décalée par rapport à celle de la figure 9A de façon à montrer le canal d'entrée du support.

Sur les différentes figures, les mêmes références désignent des éléments identiques ou similaires.

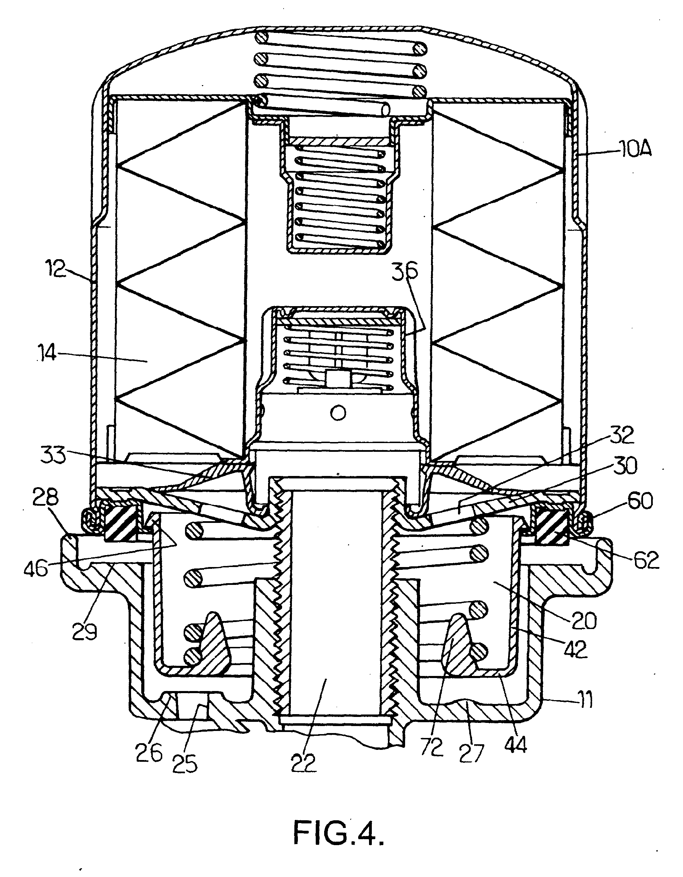

La cartouche 8 selon l'invention comporte un boîtier 10 externe délimitant un volume intérieur 12 contenant un élément filtrant 14. Le boîtier comporte une paroi périphérique 10A dans laquelle est logé l'élément filtrant. La paroi 10A comporte une portion sensiblement cylindrique et un sommet bombé (figure 4).

L'élément filtrant sépare le volume intérieur en un espace amont et un espace aval. L'élément filtrant est sensiblement tubulaire. L'espace amont correspond à un espace d'entrée de l'huile dans la cartouche, avant filtration, en partie basse du filtre et sur la périphérie. L'espace aval correspond à un espace dans lequel l'huile est filtrée, à l'intérieur du tube formant filtre.

La cartouche 8 est prévue pour être montée sur un support 11 aménagé sur un bloc moteur.

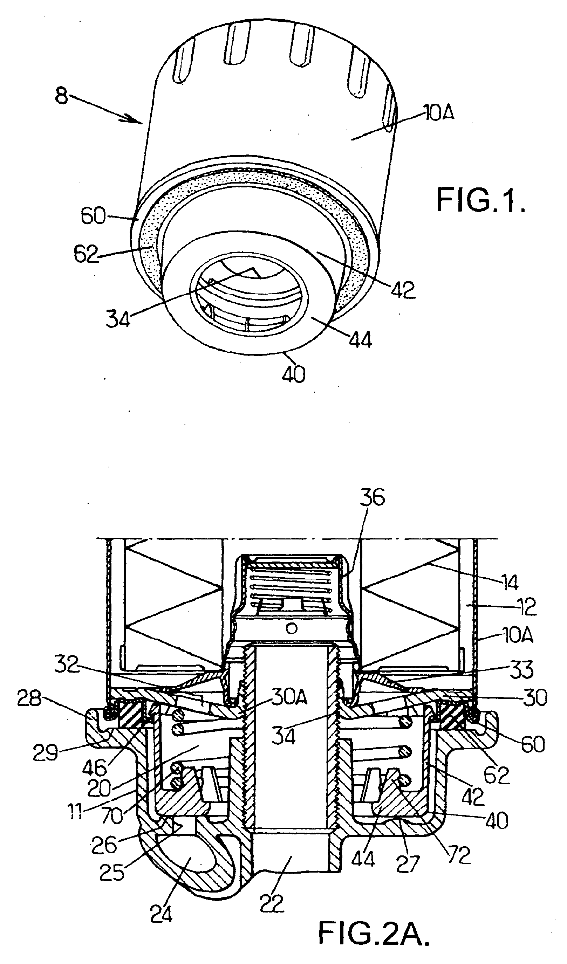

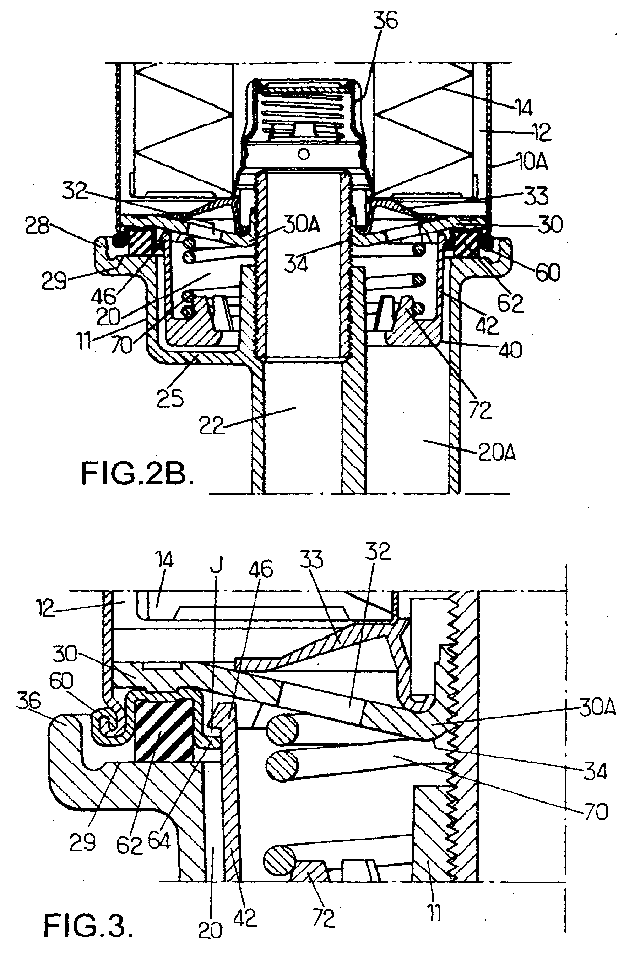

Le support 11 comporte un canal d'entrée 20A (figure 2B) et un canal de sortie 22. Le support 11 comporte aussi un canal de vidange 24 (figure 2A).

Le canal d'entrée 20A est axial et débouche dans un logement annulaire d'entrée 20 délimité par le support 11. Le canal d'entrée 20A et le logement annulaire 20 définissent un volume d'entrée.

Le canal de vidange 24 est raccordé au logement annulaire d'entrée 20. Il est normalement fermé pour éviter que le liquide soit vidangé au lieu d'être filtré.

Le support 11 comporte un relief d'étanchéité 26 en saillie dans le logement annulaire 20. Le relief d'étanchéité délimite une embouchure 25 du canal de vidange 24 normalement fermée par l'organe de fermeture 40. Le support comporte un relief d'équilibrage 27 en saillie dans le logement annulaire, diamétralement à l'opposé au relief d'étanchéité 26 dans l'exemple représenté. Dans l'exemple représenté il y a un unique relief d'équilibrage 27 en correspondance du relief d'étanchéité 26. En variante (non représentée) il serait possible de prévoir plusieurs reliefs d'équilibrage, par exemple deux reliefs d'équilibrage qui avec le relief d'étanchéité sont répartis angulairement de façon régulière. En variante (non représentée), le relief d'étanchéité pourrait présenter une forme annulaire centrée sur le canal de sortie et former aussi relief d'équilibrage.

L'embouchure 25 sur le relief d'étanchéité 26 est placée, dans le cas où l'axe de la cartouche est incliné, dans une zone basse du logement annulaire 20 afin de limiter autant que possible la quantité d'huile résiduelle dans ledit logement après démontage de la cartouche.

Le canal d'entrée 20A est décalé angulairement par rapport au relief d'équilibrage 27 qui est diamétralement opposé au relief d'étanchéité 26.

Le support comporte à la périphérie du logement annulaire d'entrée 20, raccordé à ce dernier, un épaulement extérieur annulaire qui forme une surface d'étanchéité 29 coopérant avec des moyens d'étanchéités de la cartouche.

Le support 11 comporte une bordure annulaire extérieure 28 à la périphérie de la surface d'étanchéité 29. La bordure entoure l'extrémité inférieure de la paroi périphérique 10A du boîtier 10.

Le boîtier comporte, outre la paroi périphérique 10A, un fond 30.

Le fond 30 délimite au moins un passage d'entrée de liquide 32 comportant une pluralité d'orifices ménagés dans le fond. Les orifices communiquent avec la périphérie du volume intérieur par l'intermédiaire d'une membrane anti-retour 33 située dans le bas du boîtier. La membrane 33 est ouverte lorsque du liquide circule sous pression du canal d'entrée 20A vers le volume intérieur 12 du boîtier.

Le fond comporte aussi un passage de sortie 34 qui est central, avec un filetage pour fixation de la cartouche sur un manchon du canal de sortie du support. La pluralité d'orifices du passage d'entrée 32 est donc située autour du passage de sortie 34 de la cartouche.

Dans l'espace aval, la cartouche comporte un clapet anti-drain 36 relié au passage de sortie 34 et adapté à s'ouvrir uniquement lorsqu'il règne dans l'espace aval une pression supérieure à une valeur prédéterminée.

Lorsque la cartouche est montée serrée sur le support 11, en position de fonctionnement normal tel que représenté à la figure 2, le canal d'entrée 20A du support communique avec le passage d'entrée 32 de la cartouche. Le canal de sortie 22 du support communique avec le passage de sortie 34 de la cartouche. L'embouchure 25 du canal de vidange 24 est fermé par l'organe de fermeture 40.

La cartouche peut être démontée de son support. Dans ce cas, le clapet 36 est fermé pour éviter que le volume intérieur du filtre se vide par le passage de sortie. La membrane anti retour 33 est fermée pour éviter que le volume intérieur du filtre se vide par le passage d'entrée.

Selon l'invention, la cartouche filtrante comporte un organe de fermeture 40 qui ferme l'embouchure 25 du canal de vidange 24 lorsque la cartouche est montée sur le support dans sa position de fonctionnement normal. Selon l'invention, l'organe de fermeture 40 est embarqué sur la cartouche, ce qui permet d'éviter de monter un organe de fermeture du canal de vidange embarqué sur le moteur. L'organe de fermeture 40 est monté mobile à mouvement perdu sur le fond 30 du boîtier. Il est sollicité élastiquement pour être éloigné du fond, pour compensation des jeux à la position normale d'utilisation. L'organe de fermeture 40 monté mobile à mouvement perdu et sollicité élastiquement permet d'assurer que dans la position normale d'utilisation, l'organe de fermeture vienne contacter le relief d'étanchéité 26 et fermer l'embouchure 25 du canal de vidange 24 de façon efficace.

Dans les modes de réalisation illustrés sur les figures, l'organe de fermeture 40 comporte une paroi latérale annulaire 42. La paroi latérale 42 est sensiblement cylindrique et s'étend selon l'axe central de la cartouche entre une première extrémité voisine du fond et une deuxième extrémité éloignée dudit fond.

Concernant le montage de l'organe de fermeture sur le fond 30, c'est la première extrémité de la paroi latérale 42 qui est montée sur le fond. Ici, le montage de l'organe de fermeture 40 sur le fond 30 du boîtier est effectué avec un certain jeu axial J (figure 3), en étant sollicité élastiquement à l'opposé du fond. La première extrémité de la paroi latérale 42 de l'organe de fermeture 40 comporte au moins un rebord extérieur saillant coopérant par accrochage avec un organe correspondant du fond. Ici, le rebord saillant est un crochet annulaire 46 de type encliquetage. En variante, le rebord saillant comporte une pluralité de crochets, par exemple trois, formant des secteurs angulaires d'encliquetage régulièrement répartis.

La deuxième extrémité de la paroi latérale de l'organe de fermeture est prolongée radialement vers l'intérieur par une collerette 44 interne. La collerette 44 vient en contact étanche contre le support en fermant l'embouchure 25 du canal de vidange dans le relief d'étanchéité 26.

Ainsi, la fermeture du canal de vidange est assurée lors du montage de la cartouche sur le support en compensant les dispersions dimensionnelles pouvant exister dans le support et dans la cartouche. Lors du démontage de la cartouche par rapport au support, l'organe de fermeture se déplace par rapport au fond du boîtier puis par rapport au support pour libérer l'embouchure du canal de vidange.

Le fond 30 du boîtier 10 comporte une plaque inférieure 30A dans laquelle sont ménagé les orifices 32 du passage d'entrée et au centre de laquelle est ménagé le passage de sortie 34. La plaque est reliée à l'extrémité inférieure de la paroi périphérique 10A du boîtier.

Le fond 30 du boîtier 10 comporte une rondelle emboutie 60 en métal, qui est raccordée à la plaque inférieure 30A et qui forme la périphérie du boîtier. A sa périphérie, la rondelle 60 est sertie sur l'extrémité inférieure de la paroi périphérique 10A du boîtier.

La rondelle 60 comporte une gorge annulaire s'étendant vers l'intérieur du volume intérieur du boîtier. La gorge loge un joint d'étanchéité 62.

Le joint d'étanchéité 62 forme une portée d'étanchéité annulaire du fond 30 du boîtier 10 pour venir en contact étanche avec le support. La portée d'étanchéité entoure la paroi latérale 42 de l'organe de fermeture.

La rondelle 60 comporte, raccordée vers l'intérieur à la gorge annulaire, un rebord intérieur 64. Le rebord intérieur 64 forme un épaulement pour l'accrochage de l'organe de fermeture 40 sur le fond 30. Chaque crochet 46 de l'organe de fermeture 40 est une portion mâle d'accrochage dont le rebord extérieur saillant coopère par accrochage avec ledit rebord intérieur 64. Chaque crochet 46 coopère avec une cavité d'accrochage délimité par le rebord 64 et la surface intérieure d'une paroi intérieure délimitant la gorge.

Afin de permettre le mouvement de l'organe de fermeture par rapport au fond du boîtier, par le jeu axial J, la hauteur de la cavité d'accrochage, c'est à dire ici la distance entre la plaque 30A et le rebord 64, est supérieure à la hauteur de la tête du crochet 46 formant la portion d'accrochage. Il est à remarquer que la hauteur de la bordure 28 du support correspond au moins au mouvement perdu de l'organe de fermeture sur le fond du boîtier, c'est à dire à la hauteur de la cavité d'accrochage. Ledit mouvement perdu et lesdites hauteurs doivent aussi permettre de compenser la compression du joint 62 lors du serrage de la cartouche sur le support.

Dans le mode de réalisation représenté aux figures 1 à 4, l'organe de fermeture est sollicité élastiquement par un ressort hélicoïdal 70 interposé entre le fond 30 du boîtier et ladite collerette interne 44 de la paroi latérale annulaire 42. La collerette 44 comporte des doigts de centrage 72 s'étendant vers le fond 30 du boîtier 10 pour le centrage du ressort 70 selon l'axe de la cartouche.

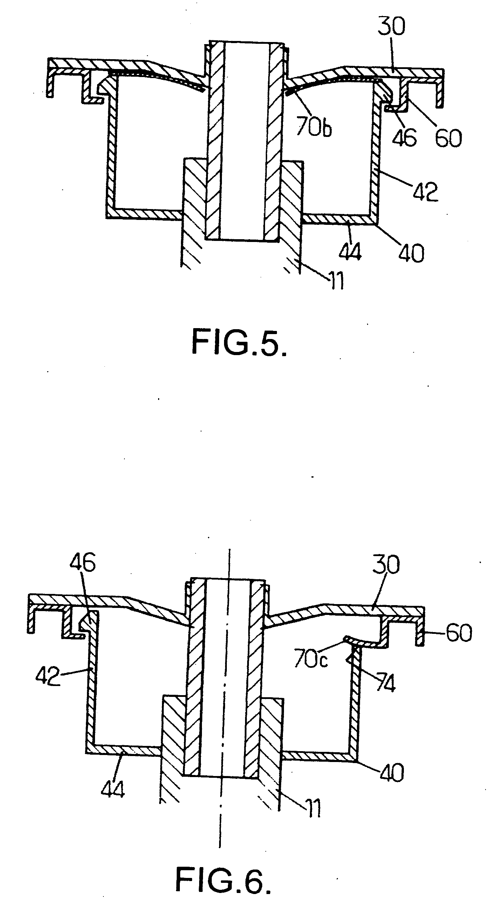

Dans le mode de réalisation représenté à la figure 5, le ressort comporte une bague élastique 70b s'étendant radialement entre une première extrémité extérieure rattachée à la paroi latérale 42 de l'organe de fermeture et une deuxième extrémité intérieure en appui sur le fond 30 du boîtier.

En variante du mode de réalisation de la figure 5, le ressort est constitué par des lames élastiques dont une première extrémité extérieure est reliée à la paroi latérale 42 de l'organe de fermeture. Chaque lame s'étend radialement vers l'intérieur. La deuxième extrémité intérieure de chaque lame est en appui sur le fond 30 du boîtier, ici sur la plaque inférieure 30A. Il y a par exemple 3 lames espacées de 120 degrés qui peuvent être reliées à leur extrémité extérieure par une bague extérieure.

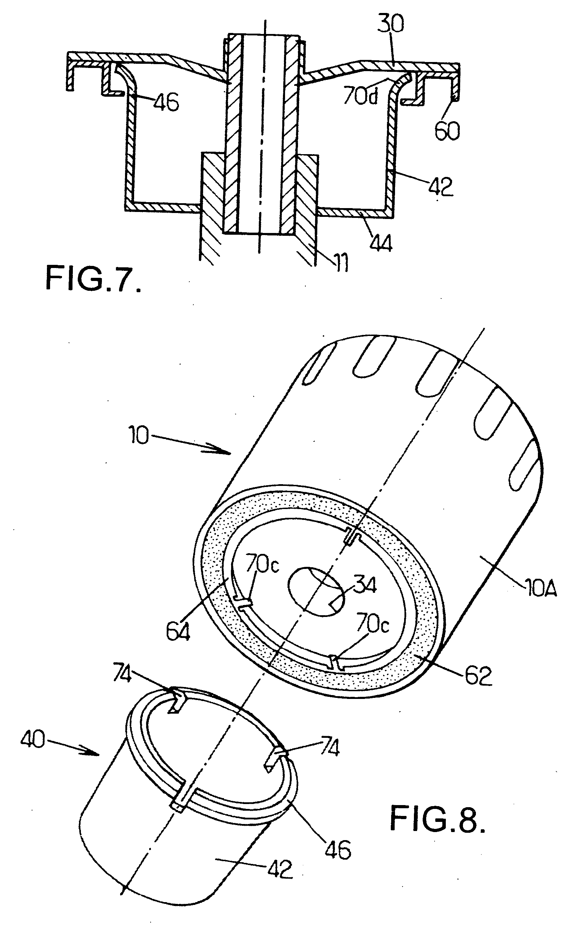

Dans le mode de réalisation représenté aux figures 6 et 8, le ressort est aussi constitué par trois lames 70c élastiques radiales, mais dont la première extrémité est rattachée à la rondelle 60, sur le rebord intérieur 64. Les lames sont ici formées par une découpe et un pliage particulier de la rondelle 60. Des encoches 74 sont aménagées dans la partie supérieure de la paroi latérale 42, ménageant des créneaux dans le rebord extérieur formant la portion d'accrochage de l'organe de fermeture. Le rebord saillant comporte donc ici une pluralité de crochets, en l'espèce trois, formant des secteurs angulaires d'encliquetage régulièrement répartis et séparés par les encoches 74.

Dans le mode de réalisation représenté à la figure 7, le ressort est constitué par des lames élastiques 70d qui sont raccordées à une première extrémité intérieure sur la paroi latérale 42 de l'organe de fermeture. Les lames 70d sont évasées vers l'extérieur de façon à ce que leur extrémité extérieure soit en appui sur le fond 30 du boîtier. Ici, les lames 70d forment tant le ressort que le rebord extérieur servant de portion d'accrochage de l'organe de fermeture 40 sur le fond 30 du boîtier.

Avantageusement, lors du démontage du filtre (figure 4) le liquide reste dans le logement d'entrée 20 pour s'écouler dans le canal de vidange 24 quand l'organe de fermeture est en butée basse par rapport au fond du boîtier.

Dans une première phase de démontage de la cartouche, du fait du jeu J, l'organe de fermeture 40 ne libère pas encore l'embouchure 25 du canal de vidange 24. En effet, du fait du mouvement perdu de l'organe de fermeture 40 par rapport au fond 30 et du fait du rappel élastique à l'opposé du fond, l'ouverture du canal de vidange 24 pour être en communication avec le logement d'entrée 20 est retardée à une deuxième phase de démontage, telle que représenté à la figure 4. Pendant la deuxième phase de démontage, l'organe de fermeture est en butée basse par rapport au fond 30, avec écoulement de l'huile comprise entre le support 11 et le fond 30.

Le liquide doit être retenu dans le support 11 pendant la première phase de démontage.

Avantageusement, le joint 62 comporte une plage d'élasticité supérieure à la hauteur du jeu J pour le mouvement perdu. La hauteur du joint 62 au repos, quand la cartouche est démontée du support, est supérieure à celle du jeu J. L'élasticité du joint est avantageusement suffisante pour autoriser une course élastique permettant son étanchéité pendant la course perdue de l'organe de fermeture 40 par rapport au fond 30 du boîtier et pendant une course supplémentaire d'ouverture entre l'organe de fermeture et le relief d'étanchéité 28.

Dans le cas d'un démontage très rapide pendant lequel le joint 62 est détendu alors que le niveau de liquide est haut dans le logement 20, la bordure 28 permet de retenir le liquide dans le support 11 pour éviter qu'il ne s'écoule vers l'extérieur lors du début du démontage de la cartouche.

Dans le cas où le joint ne serait pas assez haut ou pas assez élastique pour assurer l'étanchéité entre le support 11 et le boîtier 10, la bordure 28 permet de retenir le liquide dans le support 11 lors de la première phase de démontage de la cartouche, c'est-à-dire avant l'écoulement du liquide dans le canal de vidange 24.

La bordure est d'autant plus avantageuse que l'axe de la cartouche est incliné par rapport à la verticale.

Dans l'exemple de réalisation représenté, la cartouche comporte un clapet anti-drain 36 et une membrane anti-retour 33. Un avantage de l'invention est que dans le cas où la cartouche ne comporte pas de membrane anti-retour et/ou dans le cas où la cartouche ne comporte pas de clapet anti-drain, la vidange du volume de liquide contenue dans le boîtier est possible de façon propre.

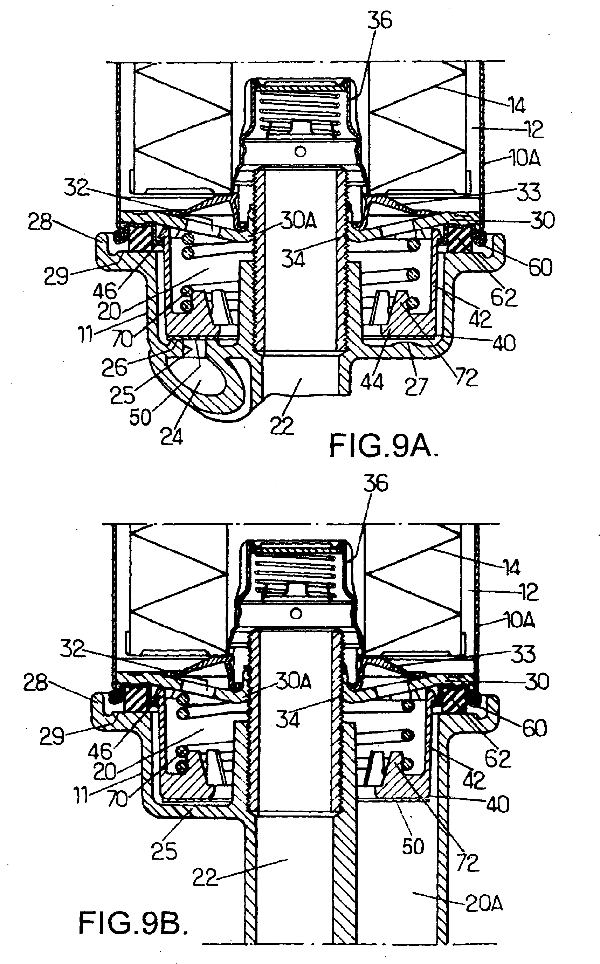

En référence aux figures 9A et 9B, le support 11 peut être pourvu d'un joint 50 qui est fixé sur une face inférieure de l'organe de fermeture 40. Il s'agit par exemple d'un joint fusible (élastomère, caoutchouc ou matériau d'étanchéité analogue) accolé par fusion au dessous de l'organe de fermeture 40. Plus généralement, l'homme du métier comprend que le joint peut consister en une pièce flexible de forme adaptée (forme de rondelle par exemple) et apte à être fixée contre une pièce rigide, la fixation pouvant être choisie parmi les techniques de collage, fusion, vulcanisation ou surmoulage. Comme illustré à la figure 9A, le canal de vidange 24 est fermé de façon étanche par le joint 50 lorsque la cartouche 8 est montée sur le support 11. L'organe de fermeture 40 peut comporter ainsi une coupelle sous laquelle est fixée une rondelle d'étanchéité permettant d'isoler de manière plus efficace le canal de vidange 24. La coupelle est raccordée par sa partie supérieure au fond 30 du boîtier 10.

La forme du joint 50 peut être annulaire, avec un positionnement centré ou non autour du canal de sortie 22. Le joint 50 n'obture que partiellement ou pas du tout le canal d'entrée 20A axial, pour permettre à ce dernier de déboucher dans le logement annulaire d'entrée 20, comme illustré à la figure 9B. Dans l'exemple non limitatif des figures 9A et 9B, la section de l'orifice du support 11 servant à communiquer avec le canal de vidange 24 est suffisamment petite pour être complètement obturée par une partie annulaire du joint 50, tandis que l'orifice formé dans le support 11 et destiné à l'arrivée d'huile est par exemple suffisamment grand, étendu radialement et/ou décalé radialement pour ne pas être obturé par le joint 50. On comprend que le joint 50 va s'appuyer de façon axiale sur une surface du support 11 en vis-à-vis de la base de l'organe de fermeture 40. Le joint 50 peut rester en revanche distant des parois latérales du support 11.

## Revendications

1. Cartouche filtrante (8) pour liquide comportant un boîtier (10) externe délimitant un volume intérieur (12) contenant un élément filtrant (14) qui sépare ledit volume intérieur en un espace amont et un espace aval, le boîtier comprenant un fond (30) délimitant au moins un passage d'entrée (32) de liquide communiquant avec l'espace amont et un passage de sortie (34) de liquide communiquant avec l'espace aval, ledit boîtier étant adapté pour être monté sur un support (11) qui comporte un canal d'entrée (20A) de liquide prévu pour communiquer avec le passage d'entrée, un canal de sortie (22) de liquide prévu pour communiquer avec le passage de sortie, et un canal de vidange (24) communiquant avec le passage d'entrée, **caractérisée en ce qu'**elle comporte un organe de fermeture (40) fixé au fond (30) du boîtier (10) et adapté à fermer le canal de vidange (24) lorsque la cartouche (8) est montée sur le support (11).

2. Cartouche filtrante selon la revendication 1, dans laquelle l'organe de fermeture (40) est monté mobile à mouvement perdu sur le fond (30) du boîtier (10) et est sollicité élastiquement à l'opposé du fond.

3. Cartouche filtrante selon la revendication 1 ou la revendication 2, dans laquelle l'organe de fermeture (40) comporte une paroi latérale annulaire (42) qui s'étend selon un axe central entre :
- une première extrémité voisine du fond (30) et reliée audit fond avec un certain jeu axial,
- et une deuxième extrémité éloignée dudit fond (30),
ledit fond comportant une portée d'étanchéité annulaire (62) adaptée à venir en contact étanche avec le support (11) et entourant ladite paroi latérale (42)

4. Cartouche filtrante selon la revendication 3, dans laquelle la deuxième extrémité de la paroi latérale (42) de l'organe de fermeture (40) est prolongée radialement vers l'intérieur par une collerette interne (44) adaptée à venir en contact étanche contre le support (11) en fermant le canal de vidange (24).

5. Cartouche filtrante selon l'une quelconque des revendications 3 ou 4, dans laquelle le fond (30) du boîtier (10) comporte un rebord intérieur (64) et la première extrémité de la paroi latérale de l'organe de fermeture (40) comporte au moins un rebord extérieur (46) saillant coopérant par accrochage avec ledit rebord intérieur.

6. Cartouche filtrante selon la revendication 5, dans laquelle le rebord intérieur (64) est une rondelle (60) en métal sertie sur une paroi périphérique du boîtier, la rondelle portant un joint (62), le joint étant la portée d'étanchéité.

7. Cartouche filtrante selon l'une quelconque des revendications 3 à 6, dans laquelle l'organe de fermeture (40) est sollicité élastiquement par au moins un ressort (70b ; 70c) interposé entre le fond (30) du boîtier (10) et la paroi latérale annulaire (42).

8. Cartouche filtrante selon une des revendications 1 à 7, dans laquelle l'organe de fermeture (40) inclut un joint (50) pour obturer de façon étanche le canal de vidange (24) lorsque la cartouche (8) est montée sur le support (11).

9. Cartouche filtrante selon une des revendications 1 à 8, dans laquelle l'organe de fermeture (40) comprend une base dotée d'un joint (50) annulaire permettant d'obturer de façon étanche le canal de vidange (24) lorsque la cartouche (8) est montée sur le support (11).

10. Cartouche filtrante selon l'une ou l'autre des revendications 8 et 9, dans laquelle le joint (50) est fixé à une première extrémité d'une pièce de l'organe de fermeture (40), ladite pièce comprenant, à une seconde extrémité opposée, une portion d'accrochage (46 ; 70d) avec le fond (30) du boîtier (10).

11. Cartouche filtrante selon la revendication 7, dans laquelle le ressort comporte une bague élastique (70b) s'étendant radialement entre une première extrémité extérieure rattachée à la paroi latérale (42) de l'organe de fermeture et une deuxième extrémité intérieure en appui sur le fond (30) du boîtier.

12. Cartouche filtrante selon la revendication 7, dans laquelle le ressort comporte des lames élastiques (70d) dont une première extrémité est reliée à la paroi latérale (42) de l'organe de fermeture (40) et l'autre extrémité est en appui sur le fond (30) du boîtier.

13. Cartouche filtrante selon la revendication 7, dans laquelle le ressort (70c) est une lame élastique solidaire du fond (30) du boîtier (10) et engagée dans une encoche (74) ménagée à la première extrémité de la paroi latérale annulaire, ladite encoche étant ouverte vers le fond (30).

14. Cartouche filtrante selon l'une quelconque des revendications 4 à 6, dans laquelle l'organe de fermeture (40) est sollicité élastiquement par un ressort hélicoïdal (70) interposé entre le fond (30) du boîtier (10) et ladite collerette interne (44).

15. Cartouche filtrante selon la revendication 14, dans laquelle la collerette (44) comporte des doigts (72) de centrage s'étendant vers le fond (30) du boîtier (10) et coopérant avec ledit ressort (70).

16. Cartouche filtrante selon l'une quelconque des revendications 2 à 15, dans laquelle la hauteur d'une cavité d'accrochage du fond (30) du boîtier (10) est supérieure à la hauteur d'une portion d'accrochage (46 ; 70d) de l'organe de fermeture (40) monté à mouvement perdu dans la cavité d'accrochage.

17. Cartouche filtrante selon l'une quelconque des revendications 2 à 16, dans laquelle un joint (62) de portée d'étanchéité est sur le boîtier (10), le joint (62) étant adapté à venir en contact étanche avec le support (11) et comportant une plage d'élasticité supérieure au mouvement perdu de l'organe de fermeture (40) sur le fond (30) du boîtier (10).

18. Cartouche filtrante selon l'une quelconque des revendications précédentes, comportant un clapet anti-drain (36) relié au passage de sortie (34) et adapté à s'ouvrir uniquement lorsqu'il règne dans l'espace aval une pression supérieure à une valeur prédéterminée.

19. Sous-ensemble de moteur comportant un support (11) sur lequel est montée de façon amovible une cartouche filtrante (8) selon l'une quelconque des revendications précédentes, ledit support comportant un canal d'entrée (20A) de liquide qui communique avec le passage d'entrée (32) de la cartouche filtrante, un canal de sortie (22) de liquide qui communique avec le passage de sortie (34) de la cartouche filtrante, et un canal de vidange (24) communiquant avec le passage d'entrée (32) de la cartouche filtrante, ledit canal de vidange étant normalement fermé par l'organe de fermeture (40).

20. Sous-ensemble selon la revendication 19, dans lequel un logement annulaire d'entrée (20) délimité par le support (11) est raccordé au canal d'entrée (20A).

21. Sous-ensemble selon la revendication 20, dans lequel le passage de sortie (34) est central et dans lequel le passage d'entrée (32) comporte une pluralité d'orifices ménagés dans le fond (30) autour du passage de sortie, le canal de sortie (22) étant central et le logement annulaire (20) étant autour du canal de sortie.

22. Sous-ensemble selon l'une quelconque des revendications 20 à 21, dans lequel le support (11) comporte un relief d'étanchéité (26) en saillie dans le logement annulaire (20), le relief d'étanchéité délimitant une embouchure (25) de vidange dans le logement annulaire, l'embouchure étant normalement fermée par l'organe de fermeture (40).

23. Sous-ensemble selon la revendication 22, dans lequel le logement annulaire (20) comporte au moins un relief d'équilibrage (27).

24. Sous-ensemble selon l'une des revendications 19 à 23, dans lequel la cartouche (8) est selon la revendication 3 et dans lequel le support (11) comporte à la périphérie du logement annulaire d'entrée (20) une surface d'étanchéité (29) coopérant avec la portée d'étanchéité (62) de la cartouche, le support comportant une bordure extérieure (28) à la périphérie de la surface d'étanchéité.

25. Sous-ensemble selon la revendication 24, dans lequel la cartouche (8) est selon la revendication 3 et dans lequel la hauteur de la bordure (28) est au moins égale au mouvement perdu de l'organe de fermeture sur le fond (30) du boîtier (10).

## Claims

1. A filter cartridge (8) for filtering a liquid, the cartridge comprising an outer casing (10) defining an inside volume (12) containing a filter element (14) that separates said inside volume into an upstream space and a downstream space, the casing including an end wall (30) defining at least one liquid inlet passage (32) communicating with the upstream space, and a liquid outlet passage (34) communicating with the downstream space, said casing being adapted to be mounted on a support (11) that includes a liquid inlet channel (20A) designed to communicate with the inlet passage, a liquid outlet channel (22) designed to communicate with the outlet passage, and a drain channel (24) communicating with the inlet passage, the cartridge being **characterized in that** it includes a closure member (40) fastened to the end wall (30) of the casing (10) and adapted to close the drain channel (24) when the cartridge (8) is mounted on the support (11).

2. A filter cartridge according to claim 1, in which the closure member (40) is mounted to move with lost motion relative to the end wall (30) of the casing (10) and is resiliently biased away from the end wall.

3. A filter cartridge according to claim 1 or claim 2, in which the closure member (40) includes an annular side wall (42) that extends around a central axis between:
- a first end adjacent to the end wall (30) and connected to said end wall with a certain amount of axial clearance; and
- a second end that is remote from said end wall (30);
said end wall including an annular sealing bearing surface (62) adapted to come into leaktight contact with the support (11) and surrounding said side wall (42).

4. A filter cartridge according to claim 3, in which the second end of the side wall (42) of the closure member (40) is extended radially inwards by an inwardly-directed collar (44) adapted to come into leaktight contact against the support (11), closing the drain channel (24).

5. A filter cartridge according to claim 3 or claim 4, in which the end wall (30) of the casing (10) includes an inwardly-directed rim (64), and the first end of the side wall of the closure member (40) includes at least one outwardly-projecting rim (46) co-operating with said inwardly-directed rim by catching against it.

6. A filter cartridge according to claim 5, in which the inwardly-directed rim (64) is a metal washer (60) crimped to the peripheral wall of the casing, the washer carrying a gasket (62), the gasket constituting the sealing bearing surface.

7. A filter cartridge according to any one of claims 3 to 6, in which the closure member (40) is resiliently biased by at least one spring (70b; 70c) interposed between the end wall (30) of the casing (10) and the annular side wall (42).

8. A filter cartridge according to any one of claims 1 to 7, in which the closure member (40) includes a gasket (50) for closing the drain channel (24) in leaktight manner when the cartridge (8) is mounted on the support (11).

9. A filter cartridge according to any one of claims 1 to 8, in which the closure member (40) includes a base fitted with an annular gasket (50) enabling the drain channel (24) to be closed in tight manner when the cartridge (8) is mounted on the support (11).

10. A filter cartridge according to either one of claims 8 and 9, in which the gasket (50) is fastened to a first end of a part of the closure member (40), said part including, at an opposite second end, a catch portion (46; 70d) for catching the end wall (30) of the casing (10).

11. A filter cartridge according to claim 7, in which the spring comprises a resilient ring (70b) extending radially between an outer first end connected to the side wall (42) of the closure member, and an inner second end bearing against the end wall (30) of the casing.

12. A filter cartridge according to claim 7, in which the spring comprises spring blades (70d) each having a first end connected to the side wall (42) of the closure member (40) and an opposite end bearing against the end wall (30) of the casing.

13. A filter cartridge according to claim 7, in which the spring (70c) is a spring blade secured to the end wall (30) of the casing (10) and engaged in a notch (74) formed in the first end of the annular side wall, said notch being open towards the end wall (30).

14. A filter cartridge according to any one of claims 4 to 6, in which the closure member (40) is resiliently biased by a helical spring (70) interposed between the end wall (30) of the casing (10) and said inwardly-directed collar (44).

15. A filter cartridge according to claim 14, in which the collar (44) includes centering fingers (72) extended towards the end wall (30) of the casing (10) and co-operating with said spring (70).

16. A filter cartridge according to any one of claims 2 to 15, in which the height of a catch cavity in the end wall (30) of the casing (10) is greater than the height of a catch portion (46; 70d) of the closure member (40) mounted to move with lost motion in the catch cavity.

17. A filter cartridge according to any one of claims 2 to 16, in which a sealing bearing surface gasket (62) is provided on the casing (10), the gasket (62) being suitable for coming into leaktight contact with the support (11) and including a resilient deformation range that is greater than the lost motion of the closure member (40) relative to the end wall (30) of the casing (10).

18. A filter cartridge according to any preceding claim, including an anti-drainage valve (36) connected to the outlet passage (34) and adapted to open only when the pressure prevailing in the downstream space is greater than a predetermined value.

19. An engine subassembly comprising a support (11) having a filter cartridge (8) according to any preceding claim releasably mounted thereon, said support including a liquid inlet channel (20A) that communicates with the inlet passage (32) of the filter cartridge, a liquid outlet channel (22) that communicates with the outlet passage (34) of the filter cartridge, and a drain channel (24) communicating with the inlet passage (32) of the filter cartridge, said drain channel normally being closed by the closure member (40).

20. A subassembly according to claim 19, in which an annular inlet housing (20) defined by the support (11) is connected to the inlet channel (20A).

21. A subassembly according to claim 20, in which the outlet passage (34) is central and in which the inlet passage (32) comprises a plurality of orifices formed through the end wall (30) around the outlet passage, the outlet channel (22) being central and the annular housing (20) being around the outlet channel.

22. A subassembly according to claim 20 or claim 21, in which the support (11) includes a sealing portion in relief (26) projecting into the annular housing (20), the sealing portion in relief defining a drain inlet (25) in the annular housing, the inlet normally being closed by the closure member (40).

23. A subassembly according to claim 22, in which the annular housing (20) includes at least one equilibrium housing in relief (27).

24. A subassembly according to any one of claims 19 to 23, in which the cartridge (8) is according to claim 3, and in which the support (11) includes at the periphery of the annular inlet housing (20) a sealing surface (29) co-operating with the sealing bearing surface (62) of the cartridge, the support including an outer margin (28) at the periphery of the sealing surface.

25. A subassembly according to claim 24, in which the cartridge (8) is according to claim 3, and in which the height to the margin (28) is not less than the lost motion of the closure member relative to the end wall (30) of the casing (10).

## Patentansprüche

1. Filterpatrone (8) für Flüssigkeiten, die ein äußeres Gehäuse (10) umfasst, das ein inneres Volumen (12) begrenzt, das ein Filterelement (14) enthält, das das innere Volumen in einen oberstromigen Raum und einen unterstromigen Raum teilt, wobei das Gehäuse einen Boden (30) umfasst, der mindestens einen Flüssigkeitseingang (32) begrenzt, der mit dem oberstromigen Raum verbunden ist, und einen Flüssigkeitsausgang (34), der mit dem unterstromigen Raum verbunden ist, wobei das Gehäuse angepasst ist, um auf eine Fassung (11) montiert zu werden, die einen Flüssigkeitseingangskanal (20A), der dazu vorgesehen ist, mit dem Eingang verbunden zu sein, einen Flüssigkeitsausgangskanal (22), der dazu vorgesehen ist, mit dem Ausgang verbunden zu sein, und einen Abflusskanal (24), der mit dem Eingang verbunden ist, umfasst, **dadurch gekennzeichnet, dass** sie ein Verschlussorgan (40) umfasst, das am Boden (30) des Gehäuses (10) befestigt und angepasst ist, um den Abflusskanal (24) zu verschließen, wenn die Patrone (8) auf der Fassung (11) montiert ist.

2. Filterpatrone nach Anspruch 1, in der das Verschlussorgan (40) beweglich mit Spiel auf dem Boden (30) des Gehäuses (10) montiert ist und gegenüber vom Boden elastisch beansprucht wird.

3. Filterpatrone nach Anspruch 1 oder Anspruch 2, in der das Verschlussorgan (40) eine ringförmige Seitenwand (42) umfasst, die sich entlang einer zentralen Achse erstreckt zwischen:
- einem ersten, zum Boden (30) benachbarten und mit dem Boden mit einem bestimmten Axialspiel verbundenen Ende
- und einem zweiten, vom Boden (30) entfernten Ende,
wobei der Boden einen ringförmigen Dichtungsbereich (62) umfasst, der angepasst ist, um in dichten Kontakt mit der Fassung (11) zu kommen, und der die Seitenwand (42) umgibt.

4. Filterpatrone nach Anspruch 3, in der das zweite Ende der Seitenwand (42) des Verschlussorgans (40) zum Inneren hin durch einen inneren Flansch (44) radial verlängert ist, der angepasst ist, um in dichten Kontakt mit der Fassung (11) zu kommen, indem er den Abflusskanal (24) verschließt.

5. Filterpatrone nach einem der Ansprüche 3 oder 4, in der der Boden (30) des Gehäuses (10) einen inneren Rand (64) umfasst und das erste Ende der Seitenwand des Verschlussorgans (40) mindestens einen vorspringenden äußeren Rand (46) umfasst, der durch Einhängen mit dem inneren Rand zusammenwirkt.

6. Filterpatrone nach Anspruch 5, in der der innere Rand (64) eine Scheibe (60) aus Metall ist, die auf eine periphere Wand des Gehäuses gefalzt wird, wobei die Scheibe eine Dichtung (62) trägt, wobei die Dichtung der Dichtungsbereich ist.

7. Filterpatrone nach einem der Ansprüche 3 bis 6, in der das Verschlussorgan (40) durch mindestens eine zwischen dem Boden (30) des Gehäuses (10) und der ringförmigen Seitenwand (42) liegende Feder (70b; 70c) elastisch beansprucht wird.

8. Filterpatrone nach einem der Ansprüche 1 bis 7, in der das Verschlussorgan (40) eine Dichtung (50) umfasst, um den Abflusskanal (24) dicht zu verschließen, wenn die Patrone (8) auf die Fassung (11) montiert wird.

9. Filterpatrone nach einem der Ansprüche 1 bis 8, in der das Verschlussorgan (40) eine Basis umfasst, die mit einem Dichtungsring (50) versehen ist, der es ermöglicht, den Abflusskanal (24) dicht zu verschließen, wenn die Patrone (8) auf die Fassung (11) montiert wird.

10. Filterpatrone nach dem einem oder dem anderen der Ansprüche 8 und 9, in der die Dichtung (50) an einem ersten Ende eines Teils des Verschlussorgans (40) befestigt ist, wobei das Teil an einem gegenüber liegenden zweiten Ende einen Einhängeabschnitt (46; 70d) mit dem Boden (30) des Gehäuses (10) umfasst.

11. Filterpatrone nach Anspruch 7, in der die Feder einen elastischen Ring (70b) umfasst, der sich radial zwischen einem ersten äußeren, an der Seitenwand (42) des Verschlussorgans befestigten Ende und einem zweiten inneren, auf den Boden (30) des Gehäuses drückendes Ende erstreckt.

12. Filterpatrone nach Anspruch 7, in der die Feder elastische Blätter (70d) umfasst, deren erstes Ende mit der Seitenwand (42) des Verschlussorgans (40) verbunden ist und deren anderes Ende auf den Boden (30) des Gehäuses drückt.

13. Filterpatrone nach Anspruch 7, in der die Feder (70c) ein elastisches Blatt ist, das fest mit dem Boden (30) des Gehäuses (10) verbunden ist und in einer am ersten Ende der ringförmigen Seitenwand liegenden Kerbe (74) sitzt, wobei die Kerbe zum Boden (30) hin geöffnet ist.

14. Filterpatrone nach einem der Ansprüche 4 bis 6, in der das Verschlussorgan (40) durch eine zwischen dem Boden (30) des Gehäuses (10) und dem inneren Flansch (44) liegende Schraubenfeder (70) elastisch beansprucht wird.

15. Filterpatrone nach Anspruch 14, in der der Flansch (44) Zentrierstifte (72) umfasst, die sich zum Boden (30) des Gehäuses (10) hin erstrecken und mit der Feder (70) zusammenwirken.

16. Filterpatrone nach einem der Ansprüche 2 bis 15, in der die Höhe eines Einhängehohlraums des Bodens (30) des Gehäuses (10) höher ist als die Höhe eines Einhängeabschnitts (46; 70d) des Verschlussorgans (40), das mit Spiel im Einhängehohlraum montiert wird.

17. Filterpatrone nach einem der Ansprüche 2 bis 16, in der eine Dichtung (62) des Dichtungsbereichs auf dem Gehäuse (10) ist, wobei die Dichtung (62) angepasst ist, um in dichten Kontakt mit der Fassung (11) zu kommen, und einen Elastizitätsbereich umfasst, der höher als der Spiel des Verschlussorgans (4) auf dem Boden (30) des Gehäuses (10) ist.

18. Filterpatrone nach einem der vorstehenden Ansprüche, die eine Dränageschutzklappe (36) umfasst, die mit dem Ausgang (34) verbunden ist und angepasst ist, um sich nur dann zu öffnen, wenn im unterstromigen Raum ein Druck oberhalb eines vorbestimmten Wertes herrscht.

19. Motoruntereinheit, die eine Fassung (11) umfasst, auf die eine Filterpatrone (8) nach einem der vorstehenden Ansprüche abnehmbar montiert ist, wobei die Fassung einen Flüssigkeitseingangskanal (20A) umfasst, der mit dem Eingang (32) der Filterpatrone verbunden ist, einen Flüssigkeitsausgangskanal (22), der mit dem Ausgang (34) der Filterpatrone verbunden ist, und einen Abflusskanal (24), der mit dem Eingang (32) der Filterpatrone verbunden ist, wobei der Abflusskanal normalerweise durch das Verschlussorgan (40) verschlossen ist.

20. Untereinheit nach Anspruch 19, in der eine ringförmige, durch die Fassung (11) begrenzte Eingangskammer (2) an den Eingangskanal (20A) angeschlossen ist.

21. Untereinheit nach Anspruch 20, in der der Ausgang (34) zentral liegt und in der der Eingang (32) eine Vielzahl von Öffnungen umfasst, die im Boden (30) um den Ausgang angeordnet sind, wobei der Ausgangskanal (22) zentral liegt und die ringförmige Kammer (20) um den Ausgangskanal liegt.

22. Untereinheit nach einem der Ansprüche 20 bis 21, in der die Fassung (11) ein in die ringförmige Kammer vorspringendes Dichtungsrelief (26) umfasst, wobei das Dichtungsrelief eine Abflussmündung (25) in der ringförmigen Kammer begrenzt und die Mündung normalerweise durch das Verschlussorgan (40) verschlossen wird.

23. Untereinheit nach Anspruch 22, in der die ringförmige Kammer (20) mindestes ein Ausgleichsrelief (27) umfasst.

24. Untereinheit nach einem der Ansprüche 19 bis 23, in dem die Patrone (8) nach Anspruch 3 ausgeführt ist und in dem der Tröger (11) an der Peripherie der ringförmigen Eingangskammer (20) eine Dichtungsfläche (29) umfasst, die mit dem Dichtungsbereich (62) der Patrone zusammenwirkt, wobei die Fassung an der Peripherie der Dichtungsfläche eine äußere Kante (28) umfasst.

25. Untereinheit nach Anspruch 24, in der die Patrone (8) nach Anspruch 3 ausgeführt ist und in der die Höhe der Kante (28) mindestens gleich dem Spiel des Verschlussorgans auf dem Boden (30) des Gehäuses (10) ist.
